# EUROPÄISCHE PATENTSCHRIFT

(11) **EP 2 022 137 B1**
(45) Veröffentlichungstag und Bekanntmachung des Hinweises auf die Patenterteilung: **26.06.2013**
(21) Anmeldenummer: 07725598.2
(22) Anmeldetag: 26.05.2007
(51) Int. Cl.: H01Q 7/00, H01Q 1/22, G06K 19/077

(54) **ANTENNENANORDNUNG SOWIE DEREN VERWENDUNG**
ANTENNA CONFIGURATION AND USE THEREOF
DISPOSITIF D'ANTENNE ET SON UTILISATION

(30) Priorität: 30.05.2006 DE 102006025485
(43) Veröffentlichungstag der Anmeldung: 11.02.2009
(73) Patentinhaber: PolyIC GmbH & Co. KG, 90763 Fürth (DE)
(72) Erfinder: FICKER, Jürgen, 91052 Erlangen (DE); WILD, Heinrich, 91074 Herzogenaurach (DE); CLEMENS, Wolfgang, 90617 Puschendorf (DE); LEHNBERGER, Walter, 91757 Treuchtlingen (DE); LORENZ, Markus, 94353 Haibach (DE)
(74) Vertreter: Zinsinger, Norbert
(86) Internationale Anmeldenummer: PCT/EP2007/004702
(87) Internationale Veröffentlichungsnummer: WO 2007/137798

(56) Entgegenhaltungen:
- DE-A1-102004 040 831
- US-A1- 2005 046 573

## Beschreibung

Die Erfindung betrifft eine Antennenanordnung, welche mindestens ein elektrisch isolierendes Trägersubstrat und mindestens eine, auf mindestens einer Seite des Trägersubstrats aufgebrachte elektrisch leitende Schicht umfasst. Die Erfindung betrifft weiterhin eine Verwendung der Antennenanordnung.

Solche Antennenanordnungen sind aus DE 196 29 269 A1 für Chipkarten bekannt. Die Antennenstruktur wird hier durch Ätzen einer elektrisch leitenden Schicht hergestellt, welche auf einer elektrisch isolierenden Kunststoffschicht angeordnet und bereichsweise mit ätzresistentem Photolack bedruckt wird. In den nicht von Photolack beschichteten Bereichen der elektrisch leitenden Schicht wird diese durch Ätzen entfernt, wobei die in Form einer Leiterbahn- bzw. Antennenstruktur mit Photolack bedeckten Bereiche der elektrisch leitenden Schicht auf der Kunststoffschicht verbleiben. Anschließend wird gegebenenfalls der Photolack entfernt und die Antennenstruktur mit Schutzlack bedeckt.

Ein derartiges Verfahren zur Herstellung einer Antennenstruktur ist relativ zeitaufwendig. Weiterhin entstehen aufgrund des großflächig notwendigen Abtrags der elektrisch leitenden Schicht große Mengen an Abfallstoffen, die entsorgt bzw. recycelt werden müssen.

Um die Menge an durch Ätzen zu entfernendem Material und gleichzeitig den Bedarf an Ätzmittel zu vermindern wurde daher versucht, die elektrisch leitende Schicht lediglich im Bereich der Konturen der Antennenstruktur durch Ätzen zu entfernen.

Es hat sich jedoch gezeigt, dass in den auf dem elektrisch isolierenden Trägersubstrat verbleibenden, an die Antennenstruktur angrenzenden Bereichen der elektrisch leitenden Schicht im elektrischen Betrieb der Antennenstruktur elektrische Effekte auftreten, die zu einer Beeinträchtigung der Antennenleistung führen. So werden beispielsweise in von der Antennenstruktur umschlossenen Bereichen der elektrisch leitenden Schicht störende Wirbelströme ausgebildet. Weiterhin können Bereiche der elektrisch leitenden Schicht Störungen aufgrund einer Reflexion von elektromagnetischen Wellen erzeugen.

Die DE 10 2004 040 831 A1 beschreibt eine funketikettfähige Umverpackung. Diese Umverpackung weist zumindest einen Träger und eine elektrisch leitfähige Schicht auf. Die elektrisch leitfähige Schicht weist hierbei eine Struktur auf, die es einem elektrischen Bauteil ermöglicht, Informationen durch die Umverpackung nach Außen zu liefern oder zu halten und/oder zur Energieversorgung durch die Umverpackung hindurch zu speisen. Die Struktur unterteilt die elektrisch leitenden Schicht hierzu in zumindest zwei Flächen. Weiter können in der leitfähigen Fläche auch elektrische Bauteile, wie beispielsweise eine Antenne oder ein Kondensator ausgebildet sein.

Es stellt sich somit die Aufgabe, eine im Hinblick auf die oben genannten Probleme verbesserte Antennenanordnung bereitzustellen.

Die Aufgabe wird von einer Antennenanordnung nach Anspruch 1 gelöst.

Bei der erfindungsgemäßen Antennenanordnung ist es nunmehr möglich, dass Bereiche der elektrisch isolierenden Schicht, die nicht zur mindestens einen Antennenstruktur gehören, auf dem Trägersubstrat verbleiben. Durch die Unterteilung dieser Bereiche der elektrisch leitenden Schicht in voneinander zumindest elektrisch isolierte Inselbereiche wird die Antennenleistung nicht mehr beeinträchtigt, da die Ausbildung von Wirbelströmen bzw. von Wellenreflexionen, die für den Einsatz der Antennenanordnung im elektrischen Feld störend sind, deutlich vermindert oder sogar unterbunden wird.

Ein zusätzlicher Vorteil ist, dass die erfindungsgemäße Antennenanordnung besonders kostengünstig herstellbar ist und sich somit für Massenartikel wie Etiketten oder ähnliches eignet.

Es wird darauf hingewiesen, dass die Bildung der Inselbereiche nicht allseits der Kontur der mindestens einen Antennenstruktur erfolgen muss, sondern dass es für einen elektrischen Betrieb ausreicht, wenn die verbliebenen, nicht zur mindestens einen Antennenstruktur gehörenden Teile der elektrisch leitenden Schicht in mindestens zwei voneinander elektrisch getrennte Bereiche unterteilt werden. So sind Antennenstrukturen häufig mit elektrischen Leiterbahnen verbunden, die eine Antennenstruktur elektrisch mit weiteren Bauteilen verbinden und die selbstverständlich auch nicht in Inselbereiche unterteilt werden können, da es auf eine gute elektrische Leitfähigkeit der Leiterbahnen ankommt.

Es hat sich bewährt, wenn senkrecht zur Ebene der elektrisch leitenden Schicht gesehen ein jeder Inselbereich eine maximale Abmessung aufweist, die ≤ 50 % einer maximalen Abmessung der mindestens einen Antennenstruktur beträgt. Besonders bevorzugt ist es dabei, wenn senkrecht zur Ebene der elektrisch leitenden Schicht gesehen ein jeder Inselbereich eine maximale Abmessung aufweist, die ≤ 25 % der maximalen Abmessung der mindestens einen Antennenstruktur, insbesondere ≤ 10 % der maximalen Abmessung der mindestens einen Antennenstruktur, beträgt. Die genaue Größe der Inselbereiche kann für jeden Einsatzzweck einer Antennenstruktur verschieden sein, beispielsweise für niedrigere Frequenzen größer als für größere Frequenzen der elektromagnetischen Strahlung. Die Inselstrukturen müssen dabei weiterhin auch nicht gleichförmig ausgebildet sein. So können gezielt Effekte, wie beispielsweise eine Richtungsabhängigkeit oder eine Frequenzabhängigkeit, durch die Ausbildung bestimmter Inselstrukturen gefördert werden.

Weiterhin hat es sich bewährt, wenn senkrecht zur Ebene der elektrisch leitenden Schicht gesehen die elektrisch leitende Schicht von jedem Punkt der mindestens einen Antennenstruktur aus gesehen bis zu mindestens einem Abstand A von der mindestens einen Antennenstruktur entfernt in Inselbereiche unterteilt ist, wobei der Abstand A mindestens 50 % der maximalen Abmessung der mindestens einen Antennenstruktur beträgt. Davon ausgenommen sind allerdings die bereits oben erwähnten Leiterbahnen, mit welchen eine Antennenstruktur gegebenenfalls elektrisch kontaktiert ist.

Weiterhin hat es sich bewährt, wenn ein elektrischer Isolationsgraben zwischen benachbarten Inselbereichen dadurch gebildet ist, dass im Bereich einer Kontur eines Inselbereichs senkrecht zur elektrisch leitenden Schicht gesehen die elektrisch leitende Schicht durchtrennt oder eine Schichtdicke der elektrisch leitenden Schicht vermindert ist.

Eine vollständige Durchtrennung der elektrisch leitenden Schicht ist nicht erforderlich, solange der jeweilige Isolationsgraben lokal eine entsprechende Erhöhung des elektrischen Widerstands bewirkt. Wird die elektrisch leitende Schicht ganz durchtrennt, so hat es sich bewährt, wenn der Isolationsgraben sich auch in angrenzende Bereiche des Trägersubstrats hinein erstreckt. Allerdings soll das Trägersubstrat dabei weder durchtrennt noch in seinen Trageigenschaften wesentlich beeinträchtigt werden.
Besonders bevorzugt ist es, wenn ein Isolationsgraben senkrecht zur mindestens einen elektrisch leitenden Schicht gesehen eine Breite von weniger als 1 mm aufweist. Vorzugsweise ist die Breite des Isolationsgrabens deutlich kleiner, insbesondere < 100 µm.

Die Bildung eines solchen Isolationsgrabens kann auf unterschiedliche Weise erfolgen. So können bekannte Verfahren wie Stanzen, Ätzen, Laserschneiden, Kratzen, Prägen, Nanoimprint-Lithografie oder ähnliches eingesetzt werden.

Weiterhin eignen sich Verfahren, bei denen durch chemische Behandlung der elektrisch leitenden Schicht lokal, beispielsweise durch eine Oxidation oder ähnliches, eine Widerstandserhöhung erzeugt wird, ohne dabei einen Materialabtrag zu bewirken. Anstelle eines Isolationsgraben wird dabei eine elektrisch isolierende Barriere ausgebildet.

Besonders bevorzugt ist jedoch ein kombiniertes Stanz-Ätz-Verfahren, wie es nachfolgend beschrieben wird.

Das bevorzugte Stanz-Ätz-Verfahren umfasst im Hinblick auf die damit herzustellende Antennenanordnung folgende Schritte:
- Bereitstellen des Trägersubstrats, welches auf mindestens einer Seite, insbesondere vollflächig, mit der mindestens einen elektrisch leitenden Schicht mit einer Schichtdicke D bedeckt ist;
- Stanzen der elektrisch leitenden Schicht, wobei in der elektrisch leitenden Schicht senkrecht zu einer von der elektrisch leitenden Schicht aufgespannten Ebene mindestens ein Spalt mit einer Höhe H ausgebildet wird, dessen Verlauf in der Ebene die Kontur der mindestens einen Antennenstruktur sowie der einzelnen Inselbereiche bestimmt, wobei
- der mindestens eine Spalt derart ausgebildet wird, dass die Höhe H des Spalts geringer oder gleich der Schichtdicke D der elektrisch leitenden Schicht ist, und
- anschließend die elektrisch leitende Schicht geätzt wird, derart dass die elektrisch leitende Schicht im Bereich des mindestens einen Spalts durchtrennt und der Spalt erweitert wird.

Dieses bevorzugte Verfahren stellt ein besonders wirtschaftliches, umweltschonendes und produktionssicheres ätzgestütztes Stanzverfahren bereit, das neben einer sehr hohen Prozessgeschwindigkeiten noch den weiteren Vorteil aufweist, dass kostengünstige, einfach geformte Stanzwerkzeuge eingesetzt werden können und darüber hinaus Leiterstrukturen bis unterhalb eines Millimeters erzielt werden können. So können Bereiche bis 800 µm Breite auch bei duktilen Materialien (z.B. Aluminium, Kupfer) erzielt werden.

Das bevorzugte Verfahren, welches insbesondere kontinuierlich durchgeführt werden kann, ist mit herkömmlichen Stanzmaschinen, Standardwerkzeugen und Ätzanlagen durchführbar, die kostengünstig und ohne großen technischen Aufwand modifiziert werden können.

Dem Stanzen ist, insbesondere unmittelbar, ein dem jeweiligen elektrisch leitenden Material der elektrisch leitenden Schicht angepasster Ätzprozess nachgeschaltet. Dies führt einerseits zu einer völligen mechanischen und elektrischen Separierung von gestanzten, benachbarten elektrisch leitenden Flächenbereichen, so dass keine Kurzschlüsse mehr zwischen diesen auftreten können. Andererseits erfolgt gleichzeitig, zumindest bereichsweise, eine Oberflächenaktivierung der gestanzten elektrisch leitenden Schicht, nachdem aufgrund des Ätzprozesses eventuell auf der Oberfläche der elektrisch leitenden Schicht vorhandene Verunreinigungen oder Oxidschichten entfernt werden. Dies ist insbesondere von Vorteil für einen nachfolgenden In-line-Prozessschritt, wie beispielsweise ein Bondingverfahren zur elektrischen Verbindung der Antennenstruktur mit einem Chip, ein Klebverfahren, bei dem ein Leitkleber aufgetragen wird, oder ein Lötverfahren. Aufgrund der Oberflächenaktivierung ergeben sich deutliche Vorteile im Hinblick auf die erzielbare Haftkraft und Qualität der elektrischen Kontaktierung.

Es hat sich gezeigt, dass in den Bereichen der elektrisch leitenden Schicht, die die durch das Stanzen gebildeten Spalte begrenzen, der Ätzangriff deutlich schneller erfolgt als in Bereichen, die nicht gestanzt wurden. Dies wird dadurch erklärt, dass die Spalte etwaige vorhandene und das Ätzen behindernde Schichten, wie Fett- oder Oxidschichten, auf der elektrisch leitenden Schicht durchtrennen. Dies ermöglicht die Herstellung besonders feiner elektrisch leitender Strukturen auch unterhalb des bei einem reinem Stanzverfahren erzielbaren Millimeterbereiches, bei gleichzeitig erhöhter Prozessgeschwindigkeit.

Im Vergleich zu Standardätzprozessen werden nur Bruchteile der elektrisch leitenden Schicht entfernt, was die Prozessgeschwindigkeit weiter erhöht. So ist beispielsweise bei einer durch eine 50 µm dicke Aluminiumschicht gebildete elektrisch leitende Schicht nur 1/25tel bis 1/50tel des Metalls zu ätzen, wenn die Schichtdicke von 50 µm im Bereich des Spalts bis auf einen Steg von lediglich 1 µm bis 2 µm durchschnitten wurde. Das bevorzugte Verfahren bietet also den besonderen Vorteil, dass äußerst wenige Abfallstoffe anfallen.

Ein vollständiges Durchstanzen des Trägersubstrats kann bei dem erfindungsgemäßen Verfahren vermieden werden, da eine größere Toleranz des Stanzspaltes eingehalten werden muss, so dass das Trägersubstrat auch nach dem Stanzen noch eine genügend hohe Reißfestigkeit aufweist, um optimal weiterverarbeitet werden zu können.

Die mindestens eine Antennenstruktur weist erfindungsgemäβ die Form einer Spirale mit mindestens einer Windung auf, welche einen zweiten Flächenbereich umschließt, wobei der umschlossene zweite Flächenbereich in Inselbereiche unterteilt ist. Als eine Spirale werden hierbei aber nicht nur Spiralstrukturen verstanden, die im wesentlichen auf der Kreis- oder Ellipsenform basieren. Auch Spiralformen, die einen äußeren Umfang in Form eines Rechtecks, Vielecks oder eine Mäanderform aufweisen, sollen hier unter den Begriff der Spirale fallen. Die Ausbildung von Wirbelströmen innerhalb der von einer Spirale eingeschlossenen Flächenbereiche der elektrisch leitenden Schicht wird durch die Unterteilung der elektrisch leitenden Schicht in Inselbereiche wirkungsvoll verhindert.

Es hat sich weiterhin bewährt, wenn die mindestens eine Windung von einem weiteren, zweiten Flächenbereich umschlossen ist, welcher in Inselbereiche unterteilt ist. Dadurch wird ebenso der Effekt der Wirbelstrombildung verhindert, der sich in dem die Windung umschließenden weiteren zweiten Flächenbereich ausbildet. Die Unterteilung des weiteren zweiten Flächenbereichs in Inselbereiche verhindert ebenfalls ein Auftreten von Wirbelströmen bzw. einer Gegeninduktion und ein Auftreten von Wellenreflexionen.

Es sich bewährt, wenn die mindestens eine Antennenstruktur als Dipol, T-förmig, L-förmig, U-förmig oder als eine Kombination aus solchen Antennenstrukturen ausgebildet ist.

Die Form einer Antennenstruktur hängt stark von der verwendeten Radiofrequenz, von einer Verwendung im Nahfeld oder im Fernfeld und von der Art der Kopplung ab. Typischerweise werden Antennenstrukturen für den niedrigfrequenten bis hochfrequenten Bereich (typischerweise Frequenzen < 50MHz; am häufigsten 125 bis 135 kHz, 8,2 MHz oder 13,56 MHz) im Nahfeld eingesetzt und als Spulenanordnung für eine induktive Kopplung ausgeformt. Es besteht weiterhin die Möglichkeit, in diesem Frequenzbereich eine kapazitive Kopplung einzusetzen, wobei die Antennenstruktur einen Dipolaufbau aufweist. Antennenstrukturen für den Ultrahochfrequenz- bis Mikrowellen-Bereich (typischerweise > 100 MHz; am häufigsten 400 bis 500 MHz, 850 bis 950 MHz und 2 bis 2,5 GHz) werden üblicherweise im Fernfeld eingesetzt und als Dipolantenne aufgebaut. Die genaue Form einer Antennenstruktur ist abhängig vom jeweiligen Einsatzfeld. Beispielsweise erfolgt eine Anpassung an einen Transponderchip, eine Optimierung der Reichweite oder eine Einstellung hinsichtlich einer möglichst hohen Richtungsunabhängigkeit.

Es ist bevorzugt, wenn das Trägersubstrat eine Dicke im Bereich von 10 µm bis 5 mm aufweist. Weiterhin ist es bevorzugt, wenn das Trägersubstrat eine Kunststofffolie, insbesondere aus PET, PP, PPS, PES, PEN oder Polyimid, und/oder eine Papier- oder Kartonlage umfasst. Insbesondere kann auch vorgesehen sein, dass das Trägersubstrat mindestens zwei unterschiedliche Schichten, wie Papier und Kunststofffolie, umfasst. Dabei können eine oder mehrere Klebstoffschichten integriert sein. Das Trägersubstrat kann entweder starr oder flexibel ausgebildet sein. Weiterhin kann das Trägersubstrat eine gewisse eigene Funktionalität aufweisen. Es kann beispielsweise als Aufkleber oder Etikett ausgebildet sein und hierbei insbesondere eine Produktinformation, einen Strichcode und ähnliches aufweisen. Weiterhin kann das Trägersubstrat ein Verpackungsmaterial bilden oder als Substrat für ein optisches und/oder elektrisches Bauteil dienen.

Nach der Fertigstellung einer Antennenanordnung können weitere Prozessschritte vorgenommen werden und gegebenenfalls eine oder mehrere weitere Schichten, beispielsweise aus Lack, Papier, Kunststoff oder ähnlichem, aufgebracht werden.

Es ist von Vorteil, wenn das Trägersubstrat inklusive der elektrisch leitenden Schicht in einem kontinuierlichen oder quasi-kontinuierlichen Prozess verarbeitet wird. Als quasikontinuierlicher Prozess wird dabei eine Verarbeitung von vereinzelten Trägersubstrat-Abschnitten, die in Reihe nacheinander verarbeitet und/oder nebeneinander ohne Zwischenlagerung den nacheinander folgenden Prozessschritten des Verfahrens zugeführt werden, verstanden.
Als kontinuierlicher Prozess wird ein solcher verstanden, bei dem das Trägersubstrat quasi endlos, insbesondere flexibel und bandförmig, ausgestaltet ist und ohne Zwischenlagerung den nacheinander folgenden Prozessschritten des Verfahrens zugeführt wird, insbesondere in einem Rolle-zu-Rolle-Prozess verarbeitet wird. Das Trägersubstrat wird dabei von einer Vorratsrolle abgezogen, bearbeitet, insbesondere durch das bevorzugte kombinierte Stanz-Ätz-Verfahren, und anschließend auf eine weitere Rolle aufgewickelt.

Bei dem Rolle-zu-Rolle-Prozess hat es sich bewährt, das Trägersubstrat mit einer Geschwindigkeit im Bereich von 1 bis 200 m/min, insbesondere von 10 bis 100 m/min, von Rolle zu Rolle zu transportieren. Höhere Geschwindigkeiten sind natürlich ebenfalls möglich.

Es ist bevorzugt, wenn die mindestens eine elektrisch leitende Schicht auf der einen Seite des Trägersubstrats vollflächig aufgebracht ist. Es ist aber auch möglich, die elektrisch leitende Schicht nur bereichsweise auf einer Seite des Trägersubstrats vorzusehen.

Weiterhin hat es sich bewährt, wenn das mindestens eine elektrisch isolierende Trägersubstrat mindestens eine, auf eine erste Seite des Trägersubstrats aufgebrachte erste elektrisch leitende Schicht umfasst, wenn das mindestens eine elektrisch isolierende Trägersubstrat mindestens eine, auf eine zweite Seite des Trägersubstrats aufgebrachte zweite elektrisch leitende Schicht umfasst, und wenn die mindestens eine erste elektrisch leitende Schicht und/oder die mindestens eine zweite elektrisch leitende Schicht mindestens eine Antennenstruktur aufweist. So ist jeweils mindestens eine elektrisch leitende Schicht auf jeder Seite des Trägersubstrats aufgebracht und kann jeweils eine oder mehrere Antennenstrukturen umfassen. Dabei kann entweder nur eine oder beide elektrisch leitenden Schichten wie beschrieben strukturiert sein.

Dabei hat es sich für einige Anwendungen als günstig erwiesen, wenn zwischen der mindestens einen ersten elektrisch leitenden Schicht und der, von der mindestens einen ersten elektrisch leitenden Schicht elektrisch isoliert angeordneten mindestens einen zweiten elektrisch leitenden Schicht mittels eines elektrisch leitenden Kontaktmittels eine elektrisch leitende Verbindung ausgebildet ist. An einer oder mehreren Stellen des Trägersubstrats wird also eine elektrisch leitende Verbindungen zwischen den beiden, ansonsten elektrisch isoliert voneinander auf dem Trägersubstrat vorliegenden elektrisch leitenden Schichten vorgesehen.

Es hat sich weiterhin bewährt, wenn die mindestens eine elektrisch leitende Schicht eine Dicke im Bereich von 10 nm bis 100 µm aufweist. Schließlich ist es bevorzugt, wenn die elektrisch leitende Schicht aus Metall, einer Metall-Legierung, einer leitfähigen Paste, einer leitfähigen Tinte oder einem leitfähigen organisch basierten Material gebildet ist. Als Metall oder Bestandteile der Metall-Legierungen haben sich Kupfer, Nickel, Aluminium, Chrom, Eisen, Zink, Zinn, Silber, Gold, Platin und Kobalt bewährt. Als leitfähige Pasten werden vorzugsweise Silber- oder Kupferleitpasten eingesetzt. Auch Pasten enthaltend eine Mischung aus organisch leitfähigen und anorganisch leitfähigen Materialien haben sich bewährt. Es können weiterhin für bestimmte Anwendungen dotierte oder undotierte halbleitende Materialien zum Einsatz kommen, welche organisch oder anorganische basiert sind. Leitfähige Tinten enthalten beispielsweise leitfähige Materialien wie Silber in Form eines Silberkomplexes oder als Nanopartikel, wobei häufig nach dem Auftrag der Tinte ein Temperaturschritt erforderlich ist.

Insbesondere hat es sich bewährt, wenn die mindestens eine elektrisch leitende Schicht mindestens zwei unterschiedliche elektrisch leitende Schichtlagen umfasst.

So können unter Verwendung des oben beschriebenen, für die Strukturierung der elektrisch leitenden Schicht bevorzugten, kombinierten Stanz-Ätz-Verfahrens beispielsweise eine Kupferschicht und eine darauf angeordnete Goldschicht als elektrisch leitende Schicht eingesetzt werden. Beim Stanzen wird die Goldschicht durchtrennt und anschließend das Ätzen durchgeführt, wobei ein Ätzmittel so gewählt wird, dass es auf das Kupfer abgestimmt ist und das Gold nicht oder nur geringfügig angreift. Dabei greift das Ätzmittel vermehrt im Bereich des Stanzspalts an, in welchem das Kupfer für das Ätzmittel frei zugänglich und aktiviert vorliegt, während ein oberflächlicher Abtrag der elektrisch leitenden Schicht aufgrund der Goldauflage weitgehend vermieden wird.

Das Aufbringen der mindestens einen elektrisch leitenden Schicht auf das Trägersubstrat kann auf unterschiedliche Weise erfolgen, wobei unterschiedliche Verfahren kombiniert eingesetzt werden können. Insbesondere eignen sich Verfahren wie Auflaminieren, Aufkleben, Sputtern, Aufdampfen, Gießen, Drucken, Galvanisieren usw.

Es hat sich bewährt, wenn die Kontur zumindest eines Inselbereichs in Form eines alphanumerischen Zeichens, eines Symbols, einer graphischen Darstellung, einer geometrischen Figur oder einer figürlichen Darstellung ausgebildet ist. Insbesondere hat es sich bewährt, wenn mehrere Inselbereiche zusammen einen Schriftzug, ein Logo, ein Firmenkennzeichen, ein Bild oder ein graphisches Muster bilden. Dadurch lassen sich auf den jeweiligen Hersteller der Antennenanordnung bezogene Daten integrieren.

Insbesondere kann mindestens eine Inselstruktur so verwendet werden, dass sie ein weiteres technisches Bauteil bildet, wie beispielsweise eine Elektrode (insbesondere für ein optisches Element), einen Sensor, eine Batterie, eine Photovoltaik-Zelle, einen elektrischen Schalter oder Taster und ähnliches.

Die Antennenanordnung kann nicht nur eine, sondern mehrere von Inselstrukturen umgebene Antennenstrukturen umfassen, die auf einer oder beiden Seiten des Trägersubstrats angeordnet sind.

Eine Verwendung einer erfindungsgemäßen Antennenanordnung für kontaktlos gekoppelte Transponder, insbesondere für Funketiketten wie RFID-Tags (Radio Frequency Identification - Tags), ist ideal. Eine Verwendung für weitere Funketiketten wie EPC (Electronic Product Code) - Etiketten oder EAS (Electronic Article Surveillance bzw. Diebstahlschutz) -Tags ist möglich. Derartige Funketiketten basieren auf national und international freigegebenen Frequenzbändern zur Signalübertragung, typischerweise sind dies: 125 - 135 kHz, 13,56 MHz, 860 - 950 MHz oder 2,45 GHz. Teilweise können aber auch andere Frequenzbänder genutzt werden, wie z. B. 1 - 9 MHz für Diebstahlschutz-Tags. Typischerweise werden für diese Anwendung Frequenzbereiche von 1,86 bis 2,18 MHz und 7,44 bis 8,73 MHz eingesetzt.

Insbesondere ist eine Verwendung einer spiralförmigen Antennenanordnung zur Ausbildung eines RFID-Tags für den Hochfrequenzbereich, insbesondere für eine Frequenz von 13,56 MHz, ideal. Weiterhin ist eine Verwendung einer Antennenanordnung mit einer als Dipol, T-förmig, L-förmig, U-förmig oder als eine Kombination aus solchen Strukturen ausgebildeten Antennenstruktur zur Ausbildung eines RFID-Tags für den Ultrahochfrequenzbereich, insbesondere für einen Frequenzbereich von 800 bis 950 MHz, ideal.

Funketiketten bzw. RFID-Tags werden häufig zur Sicherung und Kennzeichnung von Umverpackungen von Lebensmitteln, Tabakwaren usw. eingesetzt. Des weiteren ist ein Einsatz im Logistikbereich, insbesondere bei der Automation am Fliessband, der Paketlogistik und dem sogenannten elektronischen Product Code EPC^{®}, wie von der internationalen Vereinigung EPCglobal angestrebt, hinsichtlich einer Logistikkette vom Hersteller eines Produkts bis zum Supermarkt. Weiterhin werden RFID-Tags zum Zwecke der Identifikation verwendet, wie beispielsweise für Skipässe, Firmenausweise, Reisepässe und ähnliches.

Daneben existieren sogenannte "Smart Tags", die neben einer RFID-Funktion weitere Funktionen aufweisen und für welche sich die erfindungsgemäßen Antennenanordnungen ebenfalls eignen. Derartige "Smart Tags" sind beispielsweise in der Lage, einen Temperaturverlauf aufzuzeichnen, die Funktion einer Kreditkarte bereitzustellen oder als Sensor zu fungieren.

Die Figuren 1a bis 4 sollen Antennenanordnungen beispielhaft erläutern. So zeigt:
- Figur 1a: eine Antennenanordnung mit einer spiralförmigen Antennenstruktur in der Draufsicht;
- Figur 1b: die Antennenanordnung aus Figur 1a im Schnittbild A - A';
- Figur 2a: eine weitere Antennenanordnung mit einer T-förmigen Antennenstruktur in der Draufsicht;
- Figur 2b: die Antennenanordnung aus Figur 2a im Schnittbild B - B';
- Figur 3a: eine weitere Antennenanordnung mit dipolförmiger Antennenstruktur in der Draufsicht;
- Figur 3b: die Antennenanordnung aus Figur 3a im Schnittbild C - C'; und
- Figur 4: ein Anwendungsbeispiel für eine Antennenanordnung im Bereich einer Verpackung.

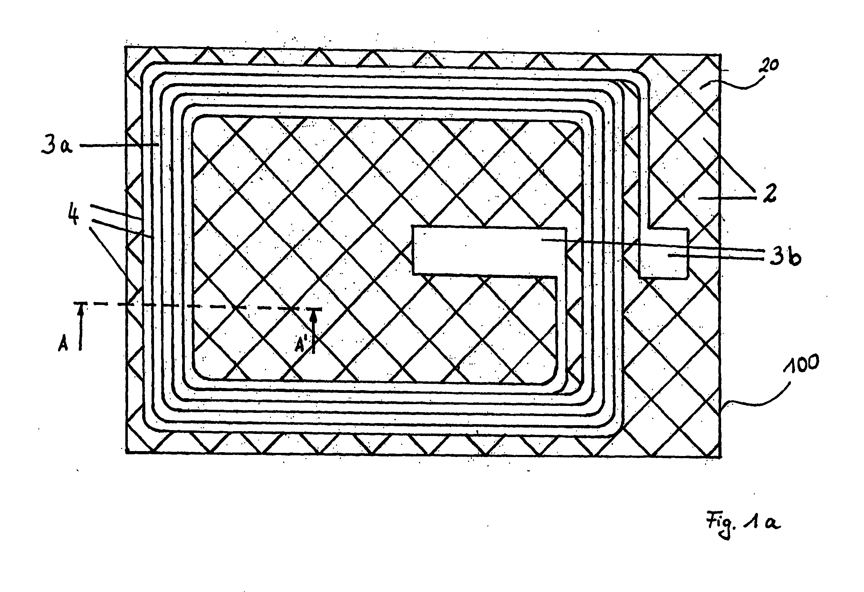

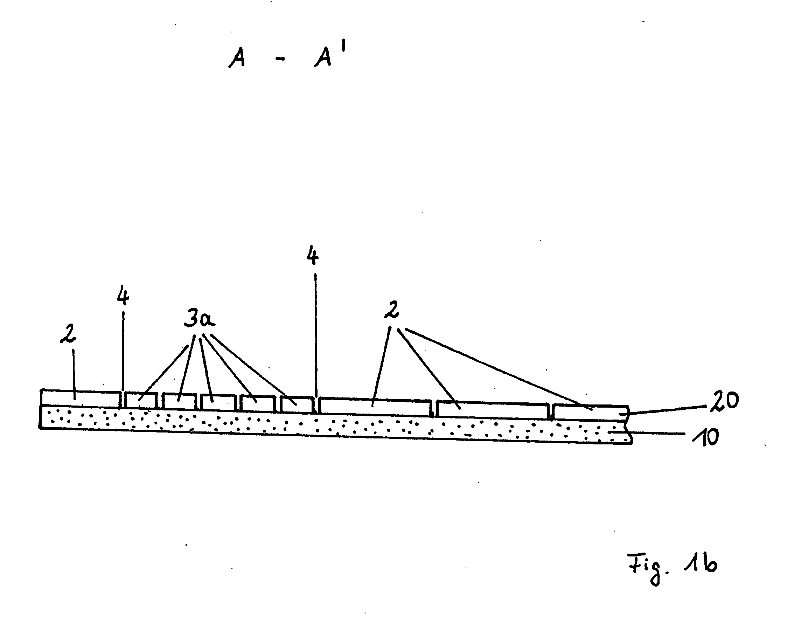

Figur 1a zeigt eine Antennenanordnung 100 in der Draufsicht mit Blick auf eine elektrisch leitende Schicht 20 aus Kupfer. Die elektrisch leitende Schicht 20 ist mittels Stanzen und nachfolgendem Ätzen strukturiert, wobei eine Antennenstruktur 3a in Form einer Spirale mit elektrischen Kontaktflächen 3b ausgebildet ist. Die Bereiche der elektrisch leitenden Schicht 20, welche innerhalb der Antennenstruktur 3a und außerhalb dieser angeordnet sind, sind ebenfalls mittels Stanzen und nachfolgendem Ätzen in elektrisch voneinander isolierte, rautenförmige Inselbereiche 2 aufgeteilt. Zwischen den Inselbereichen 2 und der Antennenstruktur 3a sowie den Kontaktflächen 3b sind Isolationsgräben 4 (siehe auch Figur 1b) ausgebildet. Auch zwischen den einzelnen Windungen der Antennenstruktur 3a sind derartige Isolationsgräben 4 angeordnet.

Figur 1b zeigt einen Bereich der Antennenanordnung 100 aus Figur 1a im Schnitt A - A'. Aus dieser Ansicht ist auch das Trägersubstrat 10, welches aus PET-Folie der Dicke 12 µm gebildet ist, erkennbar, auf welchem die elektrisch leitende Schicht 20 aus Kupfer angeordnet und in Form der Antennenstruktur 3a und der Inselbereiche 2 strukturiert worden ist.

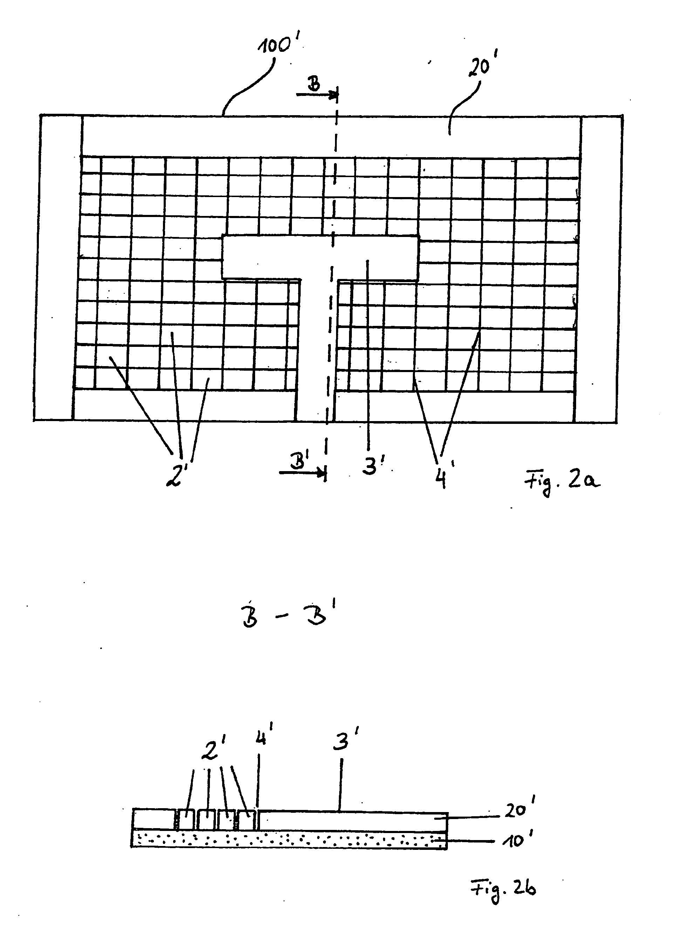

Figur 2a zeigt eine weitere Antennenanordnung 100' in der Draufsicht mit Blick auf eine elektrisch leitende Schicht 20' aus Kupfer. Die elektrisch leitende Schicht 20' ist mittels Stanzen und nachfolgendem Ätzen strukturiert, wobei eine T-förmige Antennenstruktur 3' ausgebildet ist. Die Bereiche der elektrisch leitenden Schicht 20', welche um die Antennenstruktur 3' herum angeordnet sind, sind ebenfalls mittels Stanzen und nachfolgendem Ätzen in elektrisch voneinander isolierte, rechteckige Inselbereiche 2' aufgeteilt. Zwischen den Inselbereichen 2' und der Antennenstruktur 3' sind Isolationsgräben 4' (siehe auch Figur 2b) ausgebildet. Auch zwischen den einzelnen Inselbereichen 2' sind derartige Isolationsgräben 4' angeordnet.

Figur 2b zeigt einen Bereich der Antennenanordnung 100' aus Figur 2a im Schnitt B - B'. Aus dieser Ansicht ist auch das Trägersubstrat 10', welches aus PET-Folie der Dicke 12 µm gebildet ist, erkennbar, auf welchem die elektrisch leitende Schicht 20' aus Kupfer angeordnet und in Form der Antennenstruktur 3' und der Inselbereiche 2' strukturiert worden ist.

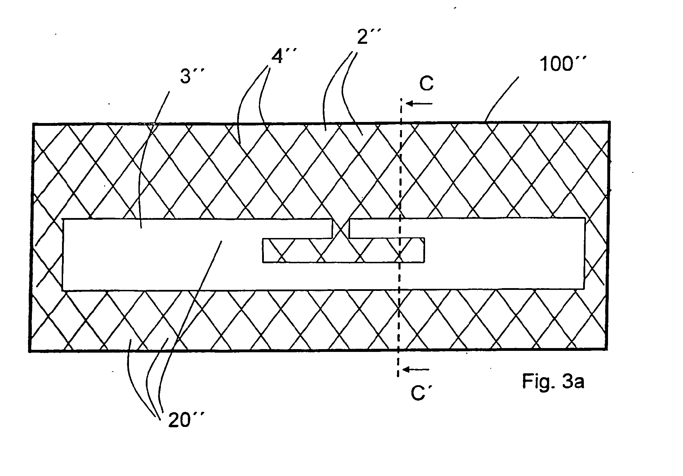

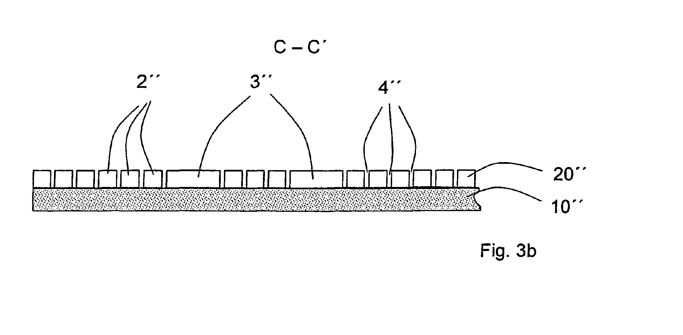

Figur 3a zeigt eine weitere Antennenanordnung 100" in der Draufsicht mit Blick auf eine elektrisch leitende Schicht 20" aus Kupfer. Die elektrisch leitende Schicht 20" ist mittels Stanzen und nachfolgendem Ätzen strukturiert worden, wobei eine dipolförmige Antennenstruktur 3" ausgebildet ist. Die Bereiche der elektrisch leitenden Schicht 20", welche um die Antennenstruktur 3" herum angeordnet sind, sind ebenfalls mittels Stanzen und nachfolgendem Ätzen in elektrisch voneinander isolierte, rautenförmige Inselbereiche 2" aufgeteilt. Zwischen den Inselbereichen 2" und der Antennenstruktur 3" sind Isolationsgräben 4" (sihe auch Figur 3b) ausgebildet. Weiterhin sind zwischen den einzelnen Inselbereichen 2" derartige Isolationsgräben 4" angeordnet.

Figur 3b zeigt einen Bereich der Antennenanordnung 100" aus Figur 3a im Schnitt C - C'. In dieser Ansicht ist auch das Trägersubstrat 10", welches aus PET-Folie der Dicke 12 µm gebildet ist, erkennbar, auf welchem die elektrisch leitende Schicht 20" aus Kupfer angeordnet und in Form der Antennenstruktur 3" und der Inselbereiche 2" strukturiert worden ist.

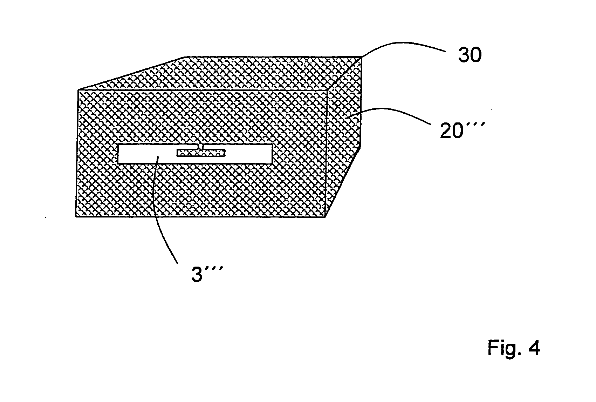

Figur 4 zeigt ein Anwendungsbeispiel für eine Antennenanordnung gemäß Figur 3a im Bereich einer rechteckig ausgeformten Verpackung 30. In die Verpackung 30 ist eine RFID-Antenne in Form der Antennenstruktur 3" integriert, welche von hier nicht nummerierten Inselbereichen umgeben ist und welche die Oberfläche der Verpackung überziehen.

Selbstverständlich können auch andere als die gezeigten Antennenanordnungen und Antennenstrukturen gebildet werden oder unterschiedliche Schichtaufbauten auf dem Trägersubstrat vorgesehen werden, ohne den Erfindungsgedanken zu verlassen.

## Patentansprüche

1. Antennenanordnung (100, 100', 100"), welche mindestens ein elektrisch isolierendes Trägersubstrat (10, 10', 10") und mindestens eine, auf mindestens einer Seite des Trägersubstrats (10, 10', 10") aufgebrachte elektrisch leitende Schicht (20, 20', 20") umfasst, wobei die elektrisch leitende Schicht (20, 20', 20") einen ersten Flächenbereich und einen zweiten Flächenbereich aufweist, wobei der erste Flächenbereich der elektrisch leitenden Schicht die Form mindestens einer Antennenstruktur (3a, 3', 3") aufweist,
**dadurch gekennzeichnet,**
**dass** die mindestens eine Antennenstruktur (3a, 3', 3") durch einen Isolationsgraben (4, 4', 4") elektrisch isoliert von dem zweiten Flächenbereich der elektrisch leitfähigen Schicht vorliegt, wobei der Isolationsgraben (4, 4', 4") senkrecht zur mindestens einen elektrisch leitenden Schicht (20, 20', 20") gesehen eine Breite von weniger als 1 mm insbesondere von weniger als 100 µm aufweist, dass der zweite Flächenbereich der elektrisch leitenden Schicht (20, 20', 20") zumindest in an die mindestens eine Antennenstruktur (3a, 3', 3") direkt angrenzenden Bereichen in voneinander zumindest elektrisch isolierte Inselbereiche (2, 2', 2") unterteilt ist, wobei senkrecht zur Ebene der elektrisch leitenden Schicht (20, 20', 20") gesehen die elektrisch leitende Schicht (20, 20', 20") von jedem Punkt der mindestens einen Antennenstruktur (3a, 3', 3") aus gesehen bis zu mindestens einem Abstand A von der mindestens einen Antennenstruktur (3a, 3', 3") entfernt in Inselbereiche (2, 2', 2") unterteilt ist, wobei der Abstand A mindestens 50 % der maximalen Abmessung der mindestens einen Antennenstruktur (3a, 3', 3") beträgt, und dass die mindestens eine Antennenstruktur die Form einer Spirale mit mindestens einer Windung aufweist, welche einen Teil des zweiten Flächenbereichs umschließt, wobei der umschlossene Teil des zweiten Flächenbereichs in Inselbereiche unterteilt ist.

2. Antennenanordnung nach Anspruch 1,
**dadurch gekennzeichnet,**
**dass** senkrecht zur Ebene der elektrisch leitenden Schicht (20, 20', 20") gesehen ein jeder Inselbereich (2, 2', 2") eine maximale Abmessung aufweist, die ≤ 50 % einer maximalen Abmessung der mindestens einen Antennenstruktur (3a, 3', 3") beträgt.

3. Antennenanordnung nach Anspruch 2,
**dadurch gekennzeichnet,**
**dass** senkrecht zur Ebene der elektrisch leitenden Schicht (20, 20', 20") gesehen ein jeder Inselbereich (2, 2', 2") eine maximale Abmessung aufweist, die ≤ 25 % der maximalen Abmessung der mindestens einen Antennenstruktur (3a, 3', 3"), insbesondere ≤ 10 % der maximalen Abmessung der mindestens einen Antennenstruktur (3a, 3', 3"), beträgt.

4. Antennenanordnung nach einem der Ansprüche 1 bis 3,
**dadurch gekennzeichnet,**
**dass** der elektrische Isolationsgraben (4, 4', 4") zwischen der mindestens einen Antennenstruktur (3a, 3', 3") und dem zweiten Flächenbereich der elektrisch leitfähigen Schicht (20, 20', 20") dadurch gebildet ist, dass im Bereich einer Kontur der mindestens einen Antennenstruktur (3a, 3', 3") senkrecht zur Ebene der elektrisch leitenden Schicht (20, 20', 20") gesehen die elektrisch leitende Schicht durchtrennt oder eine Schichtdicke der elektrisch leitenden Schicht (20, 20', 20") vermindert ist.

5. Antennenanordnung nach einem der Ansprüche 1 bis 4,
**dadurch gekennzeichnet,**
**dass** ein weiterer elektrischer Isolationsgraben (4, 4', 4") zwischen benachbarten Inselbereichen (2, 2', 2") gebildet ist, der senkrecht zur mindestens einen elektrisch leitenden Schicht (20, 20', 20") gesehen eine Breite von weniger als 1 mm, insbesondere von weniger als 100 µm aufweist.

6. Antennenanordnung nach einem der Ansprüche 1 bis 5,
**dadurch gekennzeichnet,**
**dass** die mindestens eine Windung von einem weiteren Teil des zweiten Flächenbereichs umschlossen ist, welcher in Inselbereiche (2) unterteilt ist.

7. Antennenanordnung nach einem der Ansprüche 1 bis 6,
**dadurch gekennzeichnet,**
**dass** die mindestens eine elektrisch leitende Schicht (20, 20', 20") eine Dicke im Bereich von 10 nm bis 100 µm aufweist.

8. Antennenanordnung nach einem der Ansprüche 1 bis 7,
**dadurch gekennzeichnet,**
**dass** die mindestens eine elektrisch leitende Schicht (20, 20', 20") mindestens zwei unterschiedliche elektrisch leitende Schichtlagen umfasst.

9. Antennenanordnung nach einem der Ansprüche 1 bis 8,
**dadurch gekennzeichnet,**
**dass** die Kontur zumindest eines Inselbereichs (2, 2', 2") in Form eines alphanumerischen Zeichens, eines Symbols, einer geometrischen Figur oder einer figürlichen Darstellung ausgebildet ist.

10. Antennenanordnung nach Anspruch 9,
**dadurch gekennzeichnet,**
**dass** mehrere Inselbereiche (2, 2', 2") zusammen einen Schriftzug, ein Logo, ein Firmenkennzeichen, ein Bild oder ein graphisches Muster bilden.

11. Antennenanordnung nach einem der Ansprüche 1 bis 10,
**dadurch gekennzeichnet,**
**dass** das mindestens eine elektrisch isolierende Trägersubstrat (10, 10', 10") mindestens eine, auf eine erste Seite des Trägersubstrats (10, 10', 10") aufgebrachte erste elektrisch leitende Schicht umfasst, dass das mindestens eine elektrisch isolierende Trägersubstrat (10, 10', 10") mindestens eine, auf eine zweite Seite des Trägersubstrats (10, 10', 10") aufgebrachte zweite elektrisch leitende Schicht umfasst, und dass die mindestens eine erste elektrisch leitende Schicht und/oder die mindestens eine zweite elektrisch leitende Schicht mindestens eine Antennenstruktur aufweist.

12. Verwendung einer Antennenanordnung nach einem der Ansprüche 1 bis 11 für kontaktlos gekoppelte Transponder, insbesondere für Radio-Frequenz-Identifikations (RFID) -Tags oder RF-Diebstahlschutztags.

13. Verwendung einer Antennenanordnung nach einem der Ansprüche 1 bis 11 in Form einer Verpackung, wobei die mindestens eine Antennenstruktur eine in die Verpackung integrierte RFID-Antenne bildet.

## Claims

1. Antenna configuration (100, 100', 100") that comprises at least one electrically insulating carrier substrate (10, 10', 10") and at least one electrically conductive layer (20, 20', 20") applied to at least one side of the carrier substrate (10, 10', 10"), wherein the electrically conductive layer (20, 20', 20") has a first surface area and a second surface area, wherein the first surface area of the electrically conductive layer has the form of at least one antenna structure (3a, 3', 3"),
**characterised in that**,
the at least one antenna structure (3a, 3', 3") is electrically insulated from the second surface area of the electrically conductive layer by an insulation trench (4, 4', 4"), wherein the insulation trench (4, 4', 4") has, in a perpendicular view to at least one electrically conductive layer (20, 20', 20"), a width of less than 1mm, in particular less than 100µm, that the second surface area of the electrically conductive layer (20, 20', 20") is divided into island areas (2, 2', 2") that are electrically insulated from one another at least in regions directly adjacent to the at least one antenna structure (3a, 3', 3"), wherein, in a perpendicular view to the plane of the electrically conductive layer (20, 20', 20"), the electrically conductive layer (20, 20', 20") is divided into island areas (2, 2', 2") from each point of the at least one antenna structure (3a, 3', 3") to at least one gap A that is far from the at least one antenna structure (3a, 3', 3"), wherein the gap A is 50% of the maximum size of the at least one antenna structure (3a, 3', 3"), and that the at least one antenna structure has the form of a spiral with at least one coil, which encloses one part of the second surface area, wherein the enclosed part of the second surface area is divided into island areas.

2. Antenna configuration according to claim 1,
**characterised in that**,
in a perpendicular view to the plane of the electrically conductive layer (20, 20', 20"), each island area (2, 2', 2") has a maximum size that is ≤50% of a maximum size of the at least one antenna structure (3a, 3', 3").

3. Antenna configuration according to claim 2,
**characterised in that**,
in a perpendicular view to the plane of the electrically conductive layer (20, 20', 20"), each island area (2, 2', 2") has a maximum size that is ≤25% of the maximum size of the at least one antenna structure (3a, 3', 3"), in particular ≤10% of the maximum size of the at least one antenna structure (3a, 3',3").

4. Antenna configuration according to one of claims 1 to 3,
**characterised in that**,
the electric insulation trench (4, 4', 4") is formed between the at least one antenna structure (3a, 3', 3") and the second surface area of the electrically conductive layer (20, 20', 20") by the fact that, in the area of a contour of the at least one antenna structure (3a, 3', 3"), in a perpendicular view to the plane of the electrically conductive layer (20, 20', 20"), the electrically conductive layer is separated or a layer thickness of the electrically conductive layer (20, 20', 20") is reduced.

5. Antenna configuration according to one of claims 1 to 4,
**characterised in that**,
a further electrical insulation trench (4, 4', 4") is formed between adjacent island areas (2, 2', 2"), which, in a perpendicular view to the at least one electrically conductive layer (20, 20', 20"), has a width of less than 1mm, in particular less than 100µm.

6. Antenna configuration according to one of claims 1 to 5,
**characterised in that**,
the at least one coil is enclosed by a further part of the second surface area, which is divided into island areas (2).

7. Antenna configuration according to one of claims 1 to 6,
**characterised in that**,
the at least one electrically conductive layer (20, 20', 20") has a thickness ranging from 10nm to 100µm.

8. Antenna configuration according to one of claims 1 to 7,
**characterised in that**,
the at least one electrically conductive layer (20, 20', 20") comprises at least two different electrically conductive sublayers.

9. Antenna configuration according to one of claims 1 to 8,
**characterised in that**,
the contour of at least one island area (2, 2', 2") is designed in the form of an alphanumerical character, a symbol, a geometric figure or a figurative depiction.

10. Antenna configuration according to claim 9,
**characterised in that**,
several island areas (2, 2', 2") together form a character, a logo, a manufacturer's symbol, an image or a graphic design.

11. Antenna configuration according to one of claims 1 to 10,
**characterised in that**,
the at least one electrically insulating carrier substrate (10, 10', 10") comprises at least one electrically conductive layer applied to a first side of the carrier substrate (10, 10', 10"), that the at least one electrically insulating carrier substrate (10, 10', 10") comprises at least one second electrically conductive layer applied to a second side of the carrier substrate (10, 10', 10"), and that the at least one first electrically conductive layer and/or the at least one second electrically conductive layer has at least one antenna structure.

12. Use of an antenna configuration according to one of claims 1 to 11 forcontactlessly coupled transponders, in particular for RFID tags or Smart tags.

13. Use of an antenna configuration according to one of claims 1 to 11 in the form of a packaging, wherein the at least one antenna structure forms an RFID antenna that is integrated into the packaging.

## Revendications

1. Dispositif d'antenne (100, 100', 100") qui comporte au moins un substrat porteur (10, 10', 10") électriquement isolant et au moins une couche électriquement conductrice (20, 20', 20") appliquée sur une face du substrat porteur (10, 10', 10"), la couche électriquement conductrice (20, 20', 20") comportant une première zone plane et une deuxième zone plane, la première zone plane de la couche électriquement conductrice présentant la forme d'au moins une structure d'antenne (3a, 3', 3"),
**caractérisé**
**en ce que** la ou les structures d'antenne (3a, 3', 3") sont isolées électriquement par un fossé d'isolation (4, 4', 4") de la deuxième zone plane de la couche électriquement conductrice, le fossé d'isolation (4, 4', 4") présentant, vu perpendiculairement à la ou aux couches électriquement conductrices (20, 20', 20"), une largeur inférieure à 1 mm, en particulier inférieure à 100 µm, en ce que la deuxième zone plane de la couche électriquement conductrice (20, 20', 20") est divisée au moins dans des zones directement limitrophes à la ou aux structures d'antenne (3a, 3', 3") en des zones insulaires (2, 2', 2") isolées électriquement au moins les unes des autres, vue perpendiculairement au plan de la couche électriquement conductrice (20, 20', 20"), la couche électriquement conductrice (20, 20', 20") vue depuis chaque point de la ou des structures d'antenne (3a, 3', 3") étant divisée en des zones insulaires (2, 2', 2") jusqu'à au moins une distance A de la ou des structures d'antenne (3a, 3', 3"), la distance A représentant au moins 50 % de la dimension maximale de la ou des structures d'antenne (3a, 3', 3"), et en ce que la ou les structures d'antenne présentent la forme d'une spirale ayant au moins un enroulement qui entoure une partie de la deuxième zone plane, la partie entourée de la deuxième zone plane étant divisée en des zones insulaires.

2. Dispositif d'antenne selon la revendication 1,
**Caractérisé**
**en ce que**, vue perpendiculairement au plan de la couche électriquement conductrice (20, 20', 20"), chaque zone insulaire (2, 2', 2") présente une dimension maximale qui est inférieure ou égale à 50 % d'une dimension maximale de la ou des structures d'antenne (3a, 3', 3").

3. Dispositif d'antenne selon la revendication 2,
**caractérisé**
**en ce que**, vue perpendiculairement au plan de la couche électriquement conductrice (20, 20', 20"), chaque zone insulaire (2, 2', 2") présente une dimension maximale qui est inférieure ou égale à 25 % de la dimension maximale de la ou des structures d'antenne (3a, 3', 3"), en particulier inférieure ou égale à 10 % de la dimension maximale de la ou des structures d'antenne (3a, 3', 3").

4. Dispositif d'antenne selon l'une quelconque des revendications 1 à 3,
**caractérisé**
**en ce que** le fossé d'isolation électrique (4, 4', 4") entre la ou les structures d'antenne (3a, 3', 3") et la deuxième zone plane de la couche électriquement conductrice (20, 20', 20") est formé du fait que, dans la zone d'un contour de la ou des structures d'antenne (3a, 3', 3"), vue perpendiculairement au plan de la couche électriquement conductrice (20, 20', 20"), la couche électriquement conductrice est sectionnée ou une épaisseur de la couche électriquement conductrice (20, 20', 20") est réduite.

5. Dispositif d'antenne selon l'une quelconque des revendications 1 à 4,
**caractérisé**
**en ce qu'**un autre fossé d'isolation électrique (4, 4', 4") est formé entre des zones insulaires (2, 2', 2") voisines, lequel, vu perpendiculairement à la ou aux couches électriquement conductrices (20, 20', 20"), présente une largeur inférieure à 1 mm, en particulier inférieure à 100 µm.

6. Dispositif d'antenne selon l'une quelconque des revendications 1 à 5,
**caractérisé**
**en ce que** le ou les enroulements sont entourés d'une autre partie de la deuxième zone plane qui est divisée en des zones insulaires (2).

7. Dispositif d'antenne selon l'une quelconque des revendications 1 à 6,
**caractérisé**
**en ce que** la ou les couches électriquement conductrices (20, 20', 20") présentent une épaisseur dans la plage de 10 nm à 100 µm.

8. Dispositif d'antenne selon l'une quelconque des revendications 1 à 7,
**caractérisé**
**en ce que** la ou les couches électriquement conductrices (20, 20', 20") comportent au moins deux sous-couches électriquement conductrices différentes.

9. Dispositif d'antenne selon l'une quelconque des revendications 1 à 8,
**caractérisé**
**en ce que** le contour d'au moins une zone insulaire (2, 2', 2") est conçu sous la forme d'un caractère alphanumérique, d'un symbole, d'une figure géométrique ou d'une représentation figurative.

10. Dispositif d'antenne selon la revendication 9,
**caractérisé**
**en ce que** plusieurs zones insulaires (2, 2', 2") forment ensemble un mot écrit, un logo, un symbole d'une société, une image ou un motif graphique.

11. Dispositif d'antenne selon l'une quelconque des revendications 1 à 10,
**caractérisé**
**en ce que** le ou les substrats porteurs électriquement isolants (10, 10', 10") comportent au moins une couche électriquement conductrice appliquée sur une première face du substrat porteur (10, 10', 10"), en ce que le ou les substrats porteurs électriquement isolants (10, 10', 10") comportent au moins une deuxième couche électriquement conductrice appliquée sur une deuxième face du substrat porteur (10, 10', 10"), et en ce que la ou les premières couches électriquement conductrices et/ou la ou les deuxièmes couches électriquement conductrices comportent au moins une structure d'antenne.

12. Utilisation d'un dispositif d'antenne selon l'une quelconque des revendications 1 à 11 pour un transpondeur couplé sans contact, en particulier pour des étiquettes d'identification par radiofréquence (RFID) ou des étiquettes de protection antivol RF.

13. Utilisation d'un dispositif d'antenne selon l'une quelconque des revendications 1 à 11 sous forme d'un emballage, la ou les structures d'antenne formant une antenne RFID intégrée dans l'emballage.
